# EUROPÄISCHE PATENTANMELDUNG

(11) **EP 3 501 721 A1**
(43) Veröffentlichungstag der Anmeldung: **26.06.2019**
(21) Anmeldenummer: 18207256.1
(22) Anmeldetag: 20.11.2018
(51) Int. Cl.: B23K 20/12, B23K 20/16

(54) **VERFAHREN ZUM FÜGEN VON BAUTEILEN SOWIE VORRICHTUNG**

(30) Priorität: 20.12.2017 DE 102017223410
(71) Anmelder: Rolls-Royce Deutschland Ltd & Co KG, 15827 Blankenfelde-Mahlow (DE)
(72) Erfinder: ULRICHSOHN, Björn, 15827 Blankenfelde-Mahlow (DE); HINZE, Björn, 15827 Blankenfelde-Mahlow (DE)
(74) Vertreter: Maikowski & Ninnemann Patentanwälte Partnerschaft mbB

(57) **Zusammenfassung**

Die Erfindung betrifft ein Verfahren zur Verbindung von Bauteilen, umfassend die folgenden Schritte: Bereitstellen (S100) eines ersten Bauteils (10, 10A, 10B), umfassend oder bestehend aus einem ersten Material; Bereitstellen (S101) zumindest eines zweiten Bauteils (11, 11B), umfassend oder bestehend aus einem zweiten Material; Aufbringen (S102) einer Zwischenschicht (12) auf das zweite Bauteil (11, 11A) mittels generativer Fertigung, insbesondere durch Auftragsschweißen; und Verbinden (S103) der Zwischenschicht (12) am zweiten Bauteil (11, 11A) mit dem ersten Bauteil (10, 10A, 10B) mittels Schweißen, insbesondere Reibschweißen. Die Erfindung betrifft ferner eine entsprechende Vorrichtung.

## Beschreibung

Die Erfindung betrifft ein Verfahren zum Fügen von Bauteilen nach Anspruch 1 und eine Vorrichtung nach Anspruch 14 und 15.

Insbesondere im Flugzeugbau besteht ein Bedarf nach möglichst leistungsstarken Bauteilen, die gleichzeitig ein möglichst geringes Gewicht aufweisen sollen. Hierbei werden hochfeste Metalllegierungen entwickelt, insbesondere Legierungen auf Nickelbasis. Hierbei besteht allerdings die Schwierigkeit, dass besonders leistungsfähige Legierungen oftmals nicht oder nur in nicht zufriedenstellender Qualität schweißbar sind. Um mehrere Komponenten miteinander zu verbinden, wird daher oftmals auf formschlüssige Verbindungen zurückgegriffen. Beispielsweise können zwei Bauteile mit einem Bolzen und einer Mutter miteinander verschraubt werden.

Besondere Relevanz hat diese Problematik bei Schaufelkränzen in Strömungsmaschinen. Dort ist eine Vielzahl von Schaufelblättern regelmäßig mit einem Ring oder einer Scheibe verbunden. Wird jede dieser Verbindungen durch einen Bolzen und eine Mutter hergestellt, entfällt ein nicht unerheblicher Teil des Gewichts des Schaufelkranzes auf die Verbindungen. Es ist auch bekannt, einen Schaufelkranz einstückig samt Schaufelblättern in einem Gussvorgang herzustellen. Hierbei sind jedoch komplexe Schaufelgeometrien nur schwierig zu realisieren und es können keine unterschiedlichen Materialien für den Ring oder die Scheibe einerseits und die Schaufelblätter andererseits verwendet werden. Insbesondere in der heißen Umgebung einer Turbine kann es jedoch notwendig sein, unterschiedliche Materialien vorzusehen.

Sollen die Bauteile des Schaufelkranzes miteinander verschweißt werden, z.B. mittels Reibschweißen oder Elektronenstrahlschweißen, können einige Materialien und Materialkombinationen somit für gewöhnlich nicht verwendet werden. Insbesondere bestimmte vorteilhafte Materialkombinationen sind bislang nicht mittels Reibschweißen verbindbar. Beispielsweise Materialkombinationen mit hochfesten und besonders temperaturstabilen Metalllegierungen, z.B. einigen Nickelbasislegierungen, eignen sich nicht zum Reibschweißen. Reibschweißen ist jedoch ein vorteilhaftes Schweißverfahren, weil im Unterschied zu anderen Schweißverfahren nicht die Gefahr einer die Stabilität der herzustellenden Vorrichtung beeinträchtigenden Porenbildung besteht.

Die DE 44 09 769 A1 beschreibt das Anbringen von Zwischenschichten aus Aluminium, Kupfer oder Nickel an Fügeflächen von Schaufeln aus keramischem Material, z.B. durch Galvanisieren. Die Schaufeln werden durch z.B. Reibschweißen mit Naben verbunden.

In der DE 10 2008 052 247 A1 ist ein Bauteil einer Gasturbine beschrieben, das einen Rotorgrundkörper aus einer hochwarmfesten Nickellegierung und eine Vielzahl von Turbinenschaufeln aus einer Titanlegierung umfasst. Ein Schaufelfuß ist als Adapterelement ausgebildet, das aus einem sowohl mit der Titanlegierung als auch mit der hochwarmfesten Nickellegierung verschweißbaren Werkstoff besteht.

Die bekannten Vorrichtungen und Verfahren sind für viele Materialkombinationen jedoch nicht geeignet.

Es besteht die Aufgabe, ein verbessertes Verfahren zum Fügen von Bauteilen bereitzustellen, insbesondere ein Verfahren, das es ermöglicht, besonders leistungsfähige Materialkombinationen sicher miteinander zu verbinden, ohne das Gewicht deutlich zu erhöhen, sowie eine Vorrichtung mit dementsprechend verbundenen Bauteilen.

Die Aufgabe wird durch ein Verfahren zum Fügen von Bauteilen mit den Merkmalen des Anspruchs 1 gelöst.

Danach sind folgende Schritte vorgesehen: Bereitstellen eines ersten Bauteils, das (zumindest überwiegend) aus einem ersten Material besteht oder das erste Material umfasst (das erste Material kann insbesondere ein schweißbares Material sein); Bereitstellen zumindest eines zweiten Bauteils, das (zumindest überwiegend) aus einem zweiten Material besteht oder das zweite Material umfasst (das zweite Material kann ein nicht schweißbares, insbesondere nicht reibschweißbares Material sein); Aufbringen einer Zwischenschicht auf das zumindest eine zweite Bauteil mittels generativer Fertigung, insbesondere mittels Auftragsschweißen (auch als laser cladding bezeichnet); und Verbinden der am zumindest einen zweiten Bauteil angebrachten Zwischenschicht mit dem ersten Bauteil mittels Schweißen, insbesondere mittels Reibschweißen, um eine stoffschlüssige Verbindung des ersten mit dem zumindest einen zweiten Bauteil herzustellen.

Dies basiert auf der Erkenntnis, dass einige Metalllegierungen (insbesondere Materialien mit einem hohen Gamma-Prime-Anteil) aus dem Grund nicht zufriedenstellend (insbesondere mittels Reibschweißen) verschweißbar sind, weil in diesen Prozessen ein zu hoher Energieeintrag die Materialstruktur der Legierungen beeinträchtigen würde. Das erste und das zweite Material können sich in ihren Eigenschaften zudem stark voneinander unterscheiden. Dabei kann es vorkommen, dass keine für die Materialpaarung geeigneten Parameter existieren, die ein gewöhnliches Verschweißen erlauben würden. Bei zu hohen Energieeinträgen kann es insbesondere zu Brüchen oder Rissen kommen. Zudem wäre der Aufwand eines Prüfverfahrens, mit dem die Belastbarkeit einer so hergestellten Verbindung getestet wird, sehr aufwändig.

Bei dem Auftragsschweißen ist es demgegenüber möglich, dass vergleichsweise nur sehr geringe Energieeinträge in das Material der zu verbindenden Bauteile eingebracht werden. Die Zwischenschicht kann, z.B. in mehreren Durchgängen, als Beschichtung auf das (ansonsten nicht reibschweißbare) zweite Bauteil aufgebracht werden. Das Material kann in einer Vielzahl von Lagen aufgebracht werden. Die Zwischenschicht stellt einen Verbindungsbereich zur Verbindung mit dem ersten Bauteil bereit.

Somit wird ein Verfahren zur Herstellung einer Reibschweißverbindung bereitgestellt, mit dem es möglich ist, zwei Bauteile miteinander durch Reibschweißen zu verbinden, obwohl zumindest eines der Bauteile (vor dem Auftragen der Zwischenschicht) nicht oder nicht in zufriedenstellender Weise schweißbar, insbesondere reibschweißbar ist. Das vorgeschlagene Verfahren ist somit insbesondere dahingehend verbessert, dass es die Möglichkeit eröffnet, völlig neue Materialkombinationen stoffschlüssig zu verbinden.

Das erste Material kann dasselbe Material sein, wie das zweite Material. Insbesondere kann allerdings vorgesehen sein, dass das erste Material verschieden ist vom zweiten Material. Zum Beispiel ist das erste Material ein (reib-) schweißbares Material, während das zweite Material ein solches ist, das nicht schweißbar (insbesondere nicht oder nicht zufriedenstellend mittels Reibschweißen mit einem anderen Bauteil verbindbar) ist. Insbesondere kann vorgesehen sein, dass das erste Bauteil nicht das zweite Material umfasst und/oder dass das zweite Bauteil nicht das erste Material umfasst.

In einer Ausgestaltung umfasst die Zwischenschicht das erste Material oder besteht aus dem ersten Material. Das erste Material ist insbesondere dann ein (reib-) schweißbares Material. Auf diese Weise ist es möglich, zwei eigentlich nicht (reib-) schweißbare Bauteile ohne den Einsatz eines dritten Materials mittels Schweißen, insbesondere Reibschweißen, zu verbinden. Alternativ wird die Zwischenschicht aus einem (dritten) Material hergestellt, das z.B. dem ersten Material ähnlicher ist als das zweite Material.

Bei dem ersten Material und dem zweiten Material kann es sich jeweils um eine (z.B. hochwarmfeste) Metalllegierung handeln, insbesondere um eine Nickellegierung. Bevorzugt umfasst zumindest eines von dem ersten und dem zweiten Bauteil eine Nickelbasislegierung oder besteht daraus. Insbesondere können sämtliche der Bauteile aus einer Nickelbasislegierung bestehen oder eine solche Nickelbasislegierung umfassen. Das erste Material und das zweite Material können somit unterschiedliche Nickellegierungen, insbesondere Nickelbasislegierungen umfassen oder aus unterschiedlichen Nickellegierungen, insbesondere Nickelbasislegierungen bestehen. Beispielsweise weist das erste und/oder das zweite Material Nickel als Hauptkomponente und Chrom als Nebenkomponente mit dem höchsten Anteil auf. Das erste Material ist z.B. eine (reibschweißbare) polykristalline Nickellegierung. Das Auftragsschweißen eignet sich besonders für sogenannte Superlegierungen. Insbesondere bei dem zweiten Material kann es sich um eine derartige Legierung handeln. Das zweite Material kann auch eine polykristalline Legierung sein oder alternativ in Form von Einkristallen vorliegen. Derartige Legierungen weisen eine besonders hohe Festigkeit auf und/oder sind besonders temperaturresistent. Durch hohe Gamma-Prime-Anteile ist ein Reibschweißen bislang nicht oder nicht zufriedenstellend möglich gewesen.

Bei dem ersten Material kann es sich z.B. um Inconel-718 handeln. Bei dem zweiten Material handelt es sich beispielsweise um CMSX-4, Udimet oder RR1000. Derartige Materialien weisen besonders gute Eigenschaften auf.

Bei der generativen Fertigung kann es sich insbesondere um ein Laserauftragsschweißverfahren handeln. Laserauftragsschweißen ist sehr gut geeignet, Nickelbasislegierungen zu verarbeiten und liefert besonders gute Verbindungen.

Die Zwischenschicht ist nach dem Verbinden zwischen dem ersten Bauteil und dem zweiten Bauteil angeordnet.

Es können mehrere zweite Bauteile bereitgestellt werden, wobei eine auf jedes der zweiten Bauteile mittels generativer Fertigung, insbesondere mittels Auftragsschweißen eine Zwischenschicht aufgebracht wird und die Zwischenschicht jedes der zweiten Bauteile mittels Schweißen, insbesondere mittels Reibschweißen mit dem ersten Bauteil verbunden wird. So lassen sich komplexe Vorrichtungen effizient und sicher herstellen, wobei optimierte Materialien ohne Bolzen oder dergleichen verbunden werden.

Optional umfasst das Verfahren einen nach dem Schritt des Reibschweißens folgenden Schritt einer Schweißnachbehandlung. Die Schweißnachbehandlung umfasst insbesondere eine Temperierung oder Wärmebehandlung der miteinander verbundenen Bauteile. Durch die Schweißnachbehandlung kann die Qualität der Schweißverbindung gesteigert werden.

Das Bereitstellen des ersten Bauteils kann das Schmieden des ersten Bauteils umfassen. Bei dem ersten Bauteil handelt es sich dann also um ein Schmiedebauteil.

In einer Ausgestaltung stellt das erste Bauteil einen Schaufelträger für eine Strömungsmaschine dar oder einen Teil eines solchen Schaufelträgers.

Zumindest ein zweites Bauteil ist z.B. ein Schaufelblatt für eine Strömungsmaschine oder ein weiteres Teil des Schaufelträgers. Das Schaufelblatt kann auf diese Weise besonders sicher am Schaufelträger montiert werden. Schaufelblätter für Strömungsmaschinen weisen oftmals besonders spezifische Materialanforderungen auf und es war bislang regelmäßig nötig, die Schaufelblätter z.B. mittels Schraubverbindungen zu befestigen, die das Gewicht der Vorrichtung in der Regel jedoch deutlich erhöhen.

Das Verfahren nach einer beliebigen, hierin beschriebenen Ausgestaltung kann zur Herstellung eines Schaufelkranzes für eine Strömungsmaschine ausgebildet sein, wobei das erste Bauteil in Form eines Rings oder einer Scheibe einer Strömungsmaschine bereitgestellt wird und das zumindest eine zweite Bauteil in Form einer Schaufel, insbesondere einer Verdichterschaufel oder einer Turbinenschaufel, bereitgestellt wird. So kann ein besonders robuster Schaufelkranz hergestellt werden, der zudem ein besonders geringes Gewicht aufweisen kann, da zusätzliche Verbindungseinrichtungen, z.B. Verbindungen nach Art einer Schwalbenschwanzverbindung, nicht notwendig sind. Da es sich bei den Schaufelkränzen um im Betrieb der Strömungsmaschine (z.B. in Form einer Gasturbine) rotierende Teile handeln kann, macht sich eine Gewichtsersparnis deutlich bemerkbar.

Die oben genannte Aufgabe wird auch durch eine Vorrichtung mit den Merkmalen des Anspruchs 14 gelöst. Die Vorrichtung ist insbesondere hergestellt oder herstellbar durch das Verfahren nach einer beliebigen, hierin beschriebenen Ausgestaltung. Die Vorrichtung kann Folgendes umfassen:
- ein erstes Bauteil, umfassend oder bestehend aus einem ersten Material;
- zumindest ein zweites Bauteil, umfassend oder bestehend aus einem zweiten Material;
- eine auf das zweite Bauteil durch generative Fertigung, insbesondere durch Auftragsschweißen, aufgebrachte Zwischenschicht; und
- eine Schweißverbindung, insbesondere in Form einer Reibschweißverbindung, d.h. Reibschweißnaht, die die Zwischenschicht (12) am zweiten Bauteil (11, 11A) mit dem ersten Bauteil (10, 10A, 10B) stoffschlüssig verbindet.

Die Schweißverbindung, z.B. in Form einer Reibschweißnaht, überdeckt die Zwischenschicht insbesondere vollständig oder nahezu vollständig, z.B. zumindest in zwei Raumrichtungen.

Die oben genannte Aufgabe wird auch durch eine Vorrichtung mit den Merkmalen des Anspruchs 15 gelöst. Danach weist die Vorrichtung Folgendes auf: ein erstes Bauteil oder einen ersten Abschnitt, umfassend oder bestehend aus einem ersten Material, und ein zweites Bauteil oder einen zweiten Abschnitt, umfassend oder bestehend aus einem zweiten Material, das insbesondere verschieden ist von dem ersten Material. Das erste Material des ersten Bauteils oder Abschnitts ist mit dem zweiten Material des zweiten Bauteils oder Abschnitts über eine Zwischenschicht und eine weitere Schicht, insbesondere in Form einer Reibschweißschicht, stoffschlüssig verbunden. Die Zwischenschicht ist benachbart zum zweiten Bauteil oder Abschnitt angeordnet und weist eine erste Korngröße auf (Die Körnung ist insbesondere grobkörnig und/oder gerichtet).

Die weitere Schicht ist zwischen der Zwischenschicht und dem ersten Bauteil oder Abschnitt angeordnet und weist eine zweite Korngröße auf, die kleiner ist als die erste Korngröße. Das erste Material weist eine dritte Korngröße auf, die kleiner ist als die erste Korngröße und größer als die zweite Korngröße.

Die Zwischenschicht ist an ihrer charakteristischen Form, oberflächlich sowie im Querschnitt eindeutig identifizierbar, insbesondere an Schweißraupen des Auftragsschweißens. Zudem sind die Korngrößen der Materialien messbar.

Die Vorrichtung kann als Schaufelkranz für eine Strömungsmaschine ausgebildet sein und mehrere zweite Bauteile in Form jeweils eines Schaufelblatts umfassen.

Hinsichtlich der übrigen möglichen Ausgestaltungen des ersten und zweiten Bauteils und hinsichtlich der entsprechenden Vorteile wird auf die obigen Ausführungen zum Verfahren zur Verbindung der Bauteile und zur Herstellung des Schaufelkranzes Bezug genommen. Insbesondere kann es sich bei dem ersten Material um eine reibschweißbare Metalllegierung handeln, insbesondere um eine Nickelbasislegierung, und bei dem zweiten Material um eine Nickelbasislegierung, insbesondere mit einem hohen Gamma-Prime-Anteil, z.B. eine sogenannte Superlegierung, z.B. CMSX-4, Udimet oder RR1000.

Im Zusammenhang mit den in den Figuren dargestellten Ausführungsbeispielen wird die Erfindung erläutert. Dabei zeigen
- Fig. 1: ein Verfahren zum Fügen von Bauteilen;
- Fig. 2A-2E: schematische Querschnittsdarstellungen eines ersten und eines zweiten Bauteils, in verschiedenen Stadien der Herstellung einer Verbindung der beiden Bauteile;
- Fig. 3: eine schematische Schnittdarstellung eines Schaufelkranzes für eine Gasturbine mit einem ersten Bauteil und mehreren zweiten Bauteilen;
- Fig. 4: eine schematische Schnittdarstellung eines weiteren Schaufelkranzes für eine Gasturbine mit einem ersten Bauteil und mehreren zweiten Bauteilen; und
- Fig. 5: eine schematische Schnittdarstellung einer Gasturbine mit einem Fan, einem Verdichter und einer Turbine mit mehreren Schaufelkränzen;

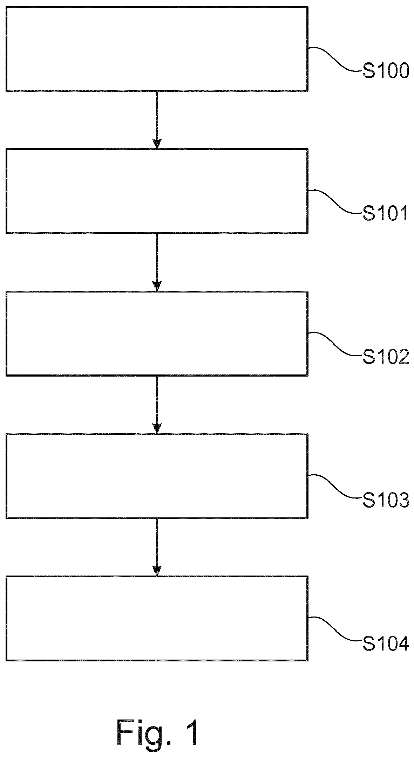

Fig. 1 zeigt mehrere Verfahrensschritte S100-S104 eines Verfahrens zum Verbinden, nämlich konkret zum Fügen von zwei oder mehr Bauteilen.

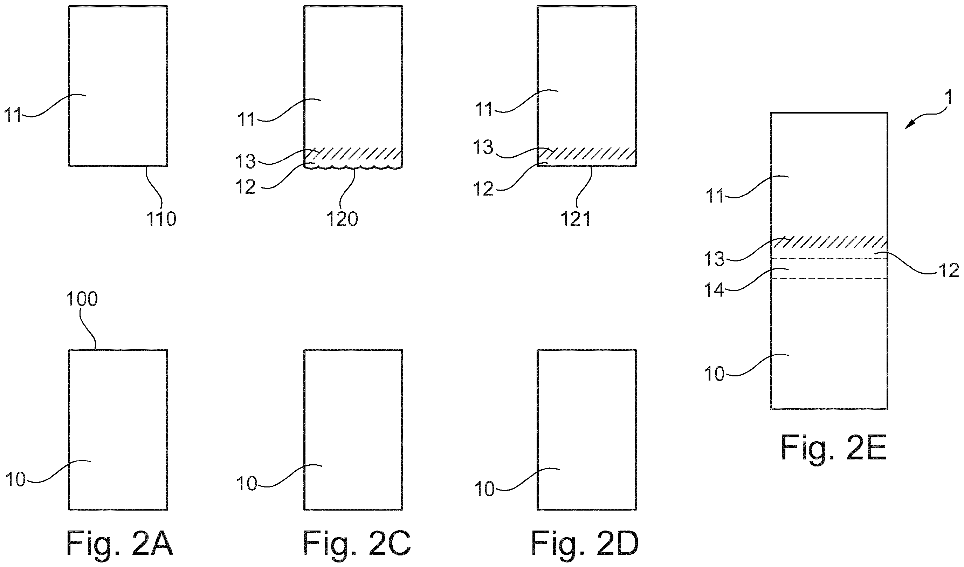

Die Fig. 2A bis 2E zeigen ein erstes Bauteil 10 und ein zweites Bauteil 11 in mehreren Stadien während des Verfahrens gemäß Fig. 1.

In einem ersten Schritt S100 wird ein erstes Bauteil 10 bereitgestellt. Das erste Bauteil 10 umfasst zumindest einen Verbindungsbereich 100, optional eine Vielzahl von Verbindungsbereichen 100. Wie in Fig. 2A veranschaulicht, ist der Verbindungsbereich 100 ein Teil der Oberfläche des ersten Bauteils 10, insbesondere, aber nicht zwingend, in Form einer ebenen Fläche. Der Verbindungsbereich 100 dient als Fügefläche. Das erste Bauteil 10 besteht (zumindest überwiegend) aus einem ersten Material, beispielsweise aus einer Nickelbasislegierung, insbesondere aus Inconel, z.B. Inconel-718.

In einem zweiten Schritt S101 wird zumindest ein zweites Bauteil 11 bereitgestellt, optional eine Vielzahl von zweiten Bauteilen 11. Das oder jedes zweite Bauteil 11 umfasst zumindest einen Verbindungsbereich 110. Wie in Fig. 2A gezeigt, ist der Verbindungsbereich 110 ein Teil der Oberfläche des zweiten Bauteils 11, insbesondere, aber nicht zwingend, in Form einer ebenen Fläche. Der Verbindungsbereich 110 dient als Fügefläche. Das zweite Bauteil 11 besteht (zumindest überwiegend) aus einem zweiten Material, das verschieden ist von dem ersten Material. Anders ausgedrückt bestehen das erste und das zweite Bauteil 10, 11 aus verschiedenen Materialien. Das zweite Material ist z.B. eine Nickelbasislegierung wie etwa CMSX-4, alternativ Udimet oder RR1000.

In einem dritten Schritt S102 wird auf das zweite Bauteil 11 eine Zwischenschicht 12 aufgetragen. Das Auftragen der Zwischenschicht 12 erfolgt auf den Verbindungsbereich 110 des zweiten Bauteils 11. Das Auftragen der Zwischenschicht 12 erfolgt mittels Auftragsschweißen, im vorliegenden Beispiel mittels Laserauftragsschweißen. Die Zwischenschicht 12 wird in Form einer Beschichtung auf das zweite Bauteil 11 aufgetragen.

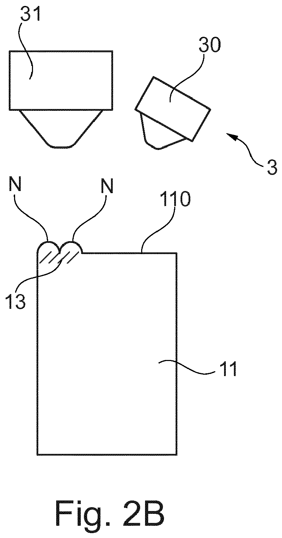

Fig. 2B zeigt das zweite Bauteil 11 und eine Schweißvorrichtung 3. Die Schweißvorrichtung 3 umfasst hier beispielhaft zumindest ein Pulverzuführungsmittel 30 und zumindest einen Laser 31. Die Schweißvorrichtung 3 ist ausgebildet zum Laserauftragsschweißen mittels Pulver.

Durch eine Relativbewegung zwischen der Schweißvorrichtung 3 und dem zweiten Bauteil 11 werden mehrere Auftragsschweißnähte N oder -raupen auf das zweite Bauteil 11 aufgebracht. Durch das Erhitzen des durch das Pulverzuführungsmittel 30 auf das zweite Bauteil aufgebrachten Pulvers mittels Laserlicht des Lasers 31 wird das Pulver zumindest teilweise geschmolzen und auch das zweite Material des zweiten Bauteils 11 wird teilweise geschmolzen. Hierdurch bildet sich eine stoffschlüssige Verbindung zwischen den Auftragsschweißnähten N und dem zweiten Bauteil 11, sowie zwischen benachbarten Auftragsschweißnähten N. Ferner bildet sich eine Mischzone 13 (in den Fig. 2B-2E schraffiert dargestellt), in der das zweite Material des zweiten Bauteils 11 und das Material des Pulvers miteinander vermischt sind. Das Material des Pulvers kann z.B. das erste Material sein, alternativ ein drittes Material. Das Material des Pulvers ist verschieden vom zweiten Material.

Es wird eine Vielzahl von Auftragsschweißnähten N aufgetragen, sodass sich die Zwischenschicht 12 ausbildet, wie insbesondere in Fig. 2C gezeigt. Die Zwischenschicht 12 erstreckt sich z.B. über eine vollständige Breite und/oder Tiefe des zweiten Bauteils 11. Alternativ kann die Zwischenschicht einen Rahmen ausbilden, z.B. um eine Verbindung herzustellen, die eine Kühlluftzufuhr innerhalb eines als Schaufelblatt ausgebildeten zweiten Bauteils erlaubt. Der Rahmen erstreckt sich z.B. entlang der Ränder des Verbindungsbereichs 110.

Durch das Auftragsschweißen kann die Zwischenschicht 12 zunächst eine Oberfläche mit mehreren Wellen 120 aufweisen. Jede der Wellen 120 entspricht einer Schweißraupe durch das Auftragsschweißen. Für eine möglichst gute Verbindung mit dem ersten Bauteil 10 können diese Wellen 120 abgefräst, insbesondere abgeschliffen oder glattgeschliffen werden. Durch das Schleifen der Zwischenschicht 12 werden die Wellen 120 entfernt, sodass die Zwischenschicht eine geschliffene, insbesondere ebene Fläche 121 aufweist, wie in Fig. 2D veranschaulicht.

In diesem Stadium weist das zweite Bauteil 11 somit folgende Abschnitte auf: den ursprünglichen Abschnitt mit oder aus dem zweiten Material, angrenzend daran die Mischzone 13 und auf der dem zweiten Material gegenüberliegenden Seite der Mischzone 13 die Zwischenschicht 12, z.B. aus dem ersten Material.

In einem vierten Schritt S103 wird die am zweiten Bauteil 11 angeordnete Zwischenschicht 12 durch Reibschweißen mit dem ersten Bauteil 10 gefügt. Die geschliffene Fläche 121 der Zwischenschicht 12 und der Verbindungsbereich 100 des ersten Bauteils 10 dienen als Kontaktflächen. Dabei werden die beiden Bauteile 10, 11 unter Druck relativ zueinander bewegt, wobei sich die Bauteile 10, 11 an den Kontaktflächen berühren.

Hierdurch bildet sich zwischen dem ersten Material des ersten Bauteils 10 und der Zwischenschicht 12 eine (flächige) Reibschweißnaht 14, siehe Fig. 2E. Die beiden Bauteile 10, 11 sind sodann zu einer Vorrichtung 1 stoffschlüssig verbunden (siehe insbesondere Fig. 2E).

Die Vorrichtung 1 umfasst somit einen Abschnitt mit dem zweiten Material (des zweiten Bauteils 11). An diesen grenzt die Mischzone 13 an. An die Mischzone 13 grenzt (gegenüberliegend zum Abschnitt mit dem zweiten Material) die Zwischenschicht 12 an. Das Material der Zwischenschicht 12 ist grobkörnig (große, erste Korngröße). Durch das Auftragsschweißen ist das Kornwachstum gerichtet, sodass die Körnung des Materials in der Zwischenschicht 12 gerichtet ist, beispielsweise zumindest abschnittsweise vorwiegend in eine Richtung weg vom Abschnitt mit dem zweiten Material. An die Zwischenschicht 12 grenzt (gegenüberliegend zur Mischzone 13) die Reibschweißnaht 14 an. Die Reibschweißnaht 14 ist feinkörnig (kleine, zweite Korngröße). An die Reibschweißnaht 14 grenzt (gegenüberliegend zur Zwischenschicht 12) ein Abschnitt mit dem ersten Material an (des ersten Bauteils 10). Das erste Material weist eine (mittelgroße) dritte Korngröße auf, die zwischen der ersten und der zweiten Korngröße liegt. Dieser Materialbereich kann auch als Wärmeeinflusszone des Reibschweißens bezeichnet werden.

Die erste, zweite und dritte Korngröße ergeben sich bei den genannten Materialien durch die beschriebenen Herstellungsschritte.

Die Stärke der Zwischenschicht 12 und der Reibschweißnaht 14 (in Richtung vom ersten zum zweiten Material gesehen) kann zusammen 0,5 bis 10 mm betragen, insbesondere 3 bis 6 mm, z.B. 5 mm.

Die Stärke der Zwischenschicht 12 (in Richtung vom ersten zum zweiten Material gesehen) nach dem dritten Schritt S102 und vor dem vierten Schritt S103 kann z.B. 3 bis 6 mm betragen. Nach dem vierten Schritt S103 ist die Stärke der Zwischenschicht 12 um beispielsweise etwa 50 % reduziert, beträgt insbesondere noch bis zu 2 mm.

Die Reibschweißnaht 14 kann als plastisch rekristallisiertes Gefüge vorliegen.

Das erste Bauteil 10 kann z.B. ein Schmiedebauteil sein. Das erste Material kann somit als Schmiedegefüge vorliegen, insbesondere als feinkörniges Schmiedegefüge.

Das zweite Bauteil 11 kann insbesondere ein gegossenes Bauteil sein.

In einem optionalen fünften Schritt S104 wird eine Schweißnachbehandlung vorgenommen, z.B. durch Wärmebehandlung der aus (zumindest) den beiden miteinander verbundenen Bauteilen 10, 11 hergestellten Vorrichtung 1. Die Wärmebehandlung ist ausgebildet und dient zur Bildung von härtenden Phasen. Falls das erste Bauteil 10 bereits geschweißt worden ist, kann eine gemeinsame Schweißnachbehandlung für die verschiedenen Schweißnähte durchgeführt werden, was eine Zeitersparnis ermöglicht.

Die Wärmebehandlung erfolgt z.B. für 4 Stunden bei 725 °C bis 735 °C mit kontrollierter Abkühlung (z.B. für Inconel-718 als das erste Material und CMSX-4 als das zweite Material).

Alternativ oder zusätzlich zu einer Wärmebehandlung werden die Zwischenschicht 12 und/oder die Reibschweißnaht 14 (seitlich) geschliffen, z.B. um eine durchgehend glatte Oberfläche vom ersten Bauteil 10 zum zweiten Bauteil 11 herzustellen.

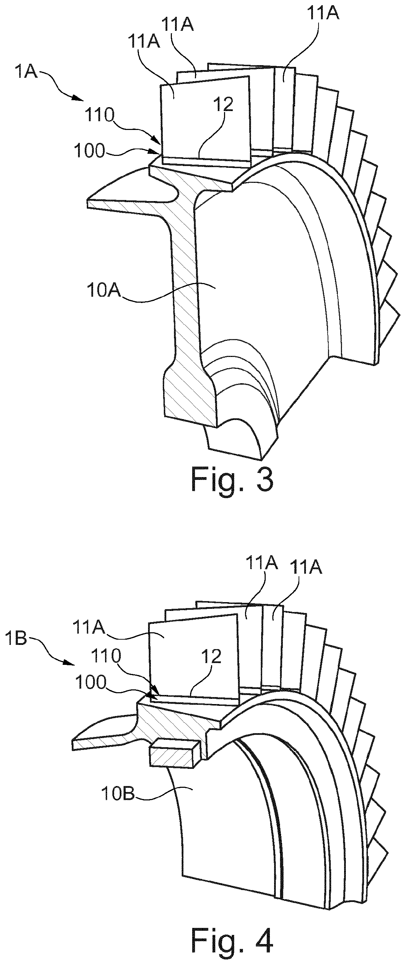

Die Fig. 3 und 4 zeigen in aufgeschnittenen Ansichten jeweils einen Schaufelkranz 1A, 1B für eine Strömungsmaschine. Die Schaufelkränze 1A, 1B sind jeweils symmetrisch um eine zentrale Achse ausgebildet, die im in der Strömungsmaschine eingebauten Zustand mit einer zentralen Rotationsachse der Strömungsmaschine zusammenfällt.

Der Schaufelkranz 1A gemäß Fig. 3 umfasst ein erstes Bauteil 10A in Form einer (kreisförmigen oder im Wesentlichen kreisförmigen) Scheibe. Das erste Bauteil 10A dient als Schaufelträger. Am ersten Bauteil 10A ist (an dessen Außenumfang) eine Vielzahl von zweiten Bauteilen 11A in Form jeweils eines Schaufelblatts vorgesehen. Das erste Bauteil 10A ist stoffschlüssig mit jedem der zweiten Bauteile 11A verbunden. Der Schaufelkranz 1A ist ein sogenanntes Blisk (Kurzform für "blade integrated disk").

Der Schaufelkranz 1B gemäß Fig. 4 umfasst ein erstes Bauteil 10B in Form eines (kreisförmigen oder im Wesentlichen kreisförmigen) Rings. Das erste Bauteil 10B dient als Schaufelträger. Am ersten Bauteil 10B ist (an dessen Außenumfang) eine Vielzahl von zweiten Bauteilen 11A in Form jeweils eines Schaufelblatts vorgesehen. Alternativ ist auch eine Anordnung entlang des Innenumfangs des ersten Bauteils 10B möglich. Das erste Bauteil 10B ist stoffschlüssig mit jedem der zweiten Bauteile 11A verbunden. Der Schaufelkranz 1B ist ein sogenanntes Bling (Kurzform für "blade integrated ring").

Besonders geeignete Materialien für die Schaufelkränze 1A, 1B sind Nickelbasislegierungen. Nickelbasislegierungen sind oftmals nur in nicht zufriedenstellender Weise oder gar nicht miteinander verschweißbar, z.B. mittels Reibschweißen. Auch können sich die technischen Anforderungen an das Material des jeweils ersten Bauteils 10A, 10B und der zweiten Bauteile 11A voneinander unterscheiden, sodass eines der beiden Materialien nicht oder nur in nicht zufriedenstellender Weise mittels Reibschweißen schweißbar sind.

Die stoffschlüssige Verbindung des jeweils ersten Bauteils 10A, 10B der Schaufelkränze 1A, 1B gemäß Fig. 3 und Fig. 4 mit den jeweiligen zweiten Bauteilen 11A ist über eine mittels Auftragsschweißen aufgebrachten Zwischenschicht 12 und einer mittels Reibschweißen hergestellten Reibschweißschicht (Reibschweißnaht 14) ausgebildet, vorliegend im Fuß oder im Bereich des Fußes des jeweiligen zweiten Bauteils 11A. Die Zwischenschicht 12 ist, insbesondere wenn der Verbindungsbereich nicht geschliffen worden ist, äußerlich an den typischen, raupenförmigen Auftragsschweißnähten N zu erkennen. Auch im Querschliff lassen sich die Auftragsschweißnähte N an ihrer typischen Formgebung erkennen. Sowohl die Zwischenschicht 12 als auch die Reibschweißnaht 14 ist anhand der Körnung des jeweiligen Materials erkennbar.

Die ersten Bauteile 10A, 10B gemäß Fig. 3 und 4 sind mit den zweiten Bauteilen 11A beispielsweise entsprechend Fig. 2E verbunden, konkret durch das insbesondere im Zusammenhang mit Fig. 1 beschriebene Verfahren.

Alternativ oder zusätzlich können die ersten Bauteile 10A, 10B der Schaufelkränze 1A, 1B gemäß Fig. 3 und 4 mehrteilig hergestellt werden, wobei die mehreren Teile (von denen dann jeweils eines ein erstes Bauteil und eines ein zweites Bauteil entsprechend Fig. 2A-2E darstellt) nach dem Verfahren gemäß Fig. 1 miteinander stoffschlüssig verbunden werden. Ferner können mehrere Schaufelkränze 1A, 1B als erste und als zweite Bauteile fungieren und z.B. axial hintereinandergeschaltet miteinander stoffschlüssig verbunden werden.

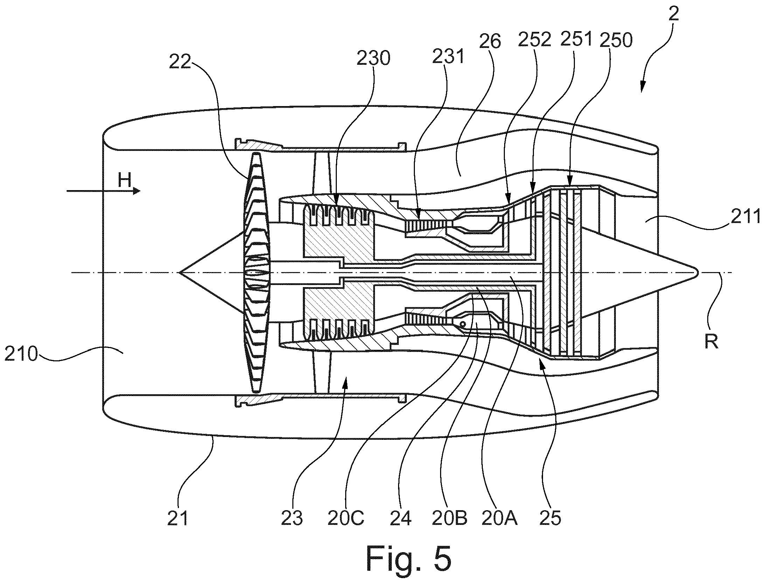

Die Schaufelkränze 1A, 1B gemäß Fig. 3 und 4 sind vorliegend Schaufelkränze für einen Verdichter einer Strömungsmaschine (insbesondere für die nachfolgend beschriebene Gasturbine 2 gemäß Fig. 5). In entsprechender Weise können selbstverständlich auch Schaufelkränze für eine Turbine einer Strömungsmaschine (insbesondere für die nachfolgend beschriebene Gasturbine 2 gemäß Fig. 5) mit einer Verbindung entsprechend Fig. 2E hergestellt werden.

Fig. 5 zeigt eine Strömungsmaschine in der Ausführungsform einer Gasturbine 2 (hier als Triebwerk für ein Flugzeug). Die Gasturbine 2 umfasst mehrere, vorliegend drei, um eine gemeinsame Rotationsachse R drehbare Wellen 20A, 20B, 20C. Die Wellen 20A, 20B, 20C sind innerhalb eines Gehäuses 21 der Gasturbine 2 angeordnet. Das Gehäuse 21 definiert einen Lufteinlauf 210 und einen Luftauslass 211.

Durch den Lufteinlauf 210 strömt ein Luftstrom in die Gasturbine 2. Die Gasturbine 2 weist eine axiale Hauptströmungsrichtung H auf. Die Hauptströmungsrichtung H verläuft im Wesentlichen entlang der Rotationsachse R der Wellen 20A, 20B, 20C. In Richtung der Hauptströmungsrichtung H gesehen umfasst die Gasturbine 2 nach dem Lufteinlauf 210 einen Fan 22, einen Verdichter 23, eine Brennkammer 24, eine Turbine 25 und den Luftauslass 211.

Die Gasturbine 2 ist vorliegend dreistufig ausgeführt. Eine der Wellen 20A, 20B, 20C dient als Niederdruckwelle 20A, eine als Mitteldruckwelle 20B und eine als Hochdruckwelle 20C. Über die Niederdruckwelle 20A treibt eine Niederdruckturbine 250 der Turbine 25 den Fan 22 an. Über die Mitteldruckwelle 20B treibt eine Mitteldruckturbine 251 einen Mitteldruckverdichter 230 des Verdichters 23 an. Über die Hochdruckwelle 20C treibt eine Hochdruckturbine 252 der Turbine 25 einen Hochdruckverdichter 231 des Verdichters 23 an.

Der Fan 22 führt einem Bypasskanal 26 zur Erzeugung von Schub Luft zu. Der Fan 22 und der Verdichter 23 verdichten zudem den durch den Lufteinlauf 210 einlaufenden Luftstrom und führen ihn entlang der Hauptströmungsrichtung H zur Verbrennung in die Brennkammer 24. Aus der Brennkammer 24 austretende heiße Verbrennungsgase werden in der Turbine 25 entspannt, bevor sie durch eine Düse des Luftauslasses 211 austreten. Die Düse sorgt für eine Restentspannung der austretenden heißen Verbrennungsgase und für eine Vermischung mit Sekundärluft, wobei der austretende Luftstrom beschleunigt wird.

Der Verdichter 23 und die Turbine 25 der Gasturbine 2 umfassen zumindest einen, im vorliegenden Beispiel jeweils mehrere Schaufelkränze. Dabei sind jeweils mehrere Laufschaufelkränze vorgesehen, die gemeinsam mit der jeweiligen Welle 20A, 20B, 20C im Gehäuse 21 rotieren, und mehrere Leitschaufelkränze, die bezüglich dem Gehäuse 21 drehfest angeordnet sind.

Der Verdichter 23 und/oder die Turbine 25 umfasst/umfassen einen Schaufelkranz 1A, 1B oder mehrere Schaufelkränze 1A, 1B gemäß Fig. 3 und/oder Fig. 4, insbesondere hergestellt durch das Verfahren gemäß Fig. 1. Hierdurch können der Verdichter 23 und/oder die Turbine 25 aus besonders robusten Materialien hergestellt sein und gleichzeitig ein besonders niedriges Gewicht aufweisen.

### Bezugszeichenliste

- 1: Vorrichtung
- 1A, 1B: Schaufelkranz
- 10, 10A, 10B: erstes Bauteil
- 100: Verbindungsbereich
- 11, 11A: zweites Bauteil
- 110: Verbindungsbereich
- 12: Zwischenschicht
- 120: Wellen
- 121: geschliffene Fläche
- 13: Mischzone
- 14: Reibschweißnaht
- 2: Gasturbine (Strömungsmaschine)
- 20A: Niederdruckwelle
- 20B: Mitteldruckwelle
- 20C: Hochdruckwelle
- 21: Gehäuse
- 210: Lufteinlass
- 211: Luftauslass
- 22: Fan
- 23: Verdichter
- 230: Mitteldruckverdichter
- 231: Hochdruckverdichter
- 24: Brennkammer
- 25: Turbine
- 250: Niederdruckturbine
- 251: Mitteldruckturbine
- 252: Hochdruckturbine
- 26: Bypasskanal
- 3: Schweißvorrichtung
- 30: Pulverzuführungsmittel
- 31: Laser
- H: Hauptströmungsrichtung
- N: Auftragsschweißnaht
- R: Rotationsachse

## Patentansprüche

1. Verfahren zum Fügen von Bauteilen, mit folgenden Schritten:
- Bereitstellen (S100) eines ersten Bauteils (10, 10A, 10B), umfassend oder bestehend aus einem ersten Material;
- Bereitstellen (S101) zumindest eines zweiten Bauteils (11, 11B), umfassend oder bestehend aus einem zweiten Material;
- Aufbringen (S102) einer Zwischenschicht (12) auf das zweite Bauteil (11, 11A) mittels generativer Fertigung, insbesondere durch Auftragsschweißen; und
- Verbinden (S103) der Zwischenschicht (12) am zweiten Bauteil (11, 11A) mit dem ersten Bauteil (10, 10A, 10B) mittels Schweißen, insbesondere Reibschweißen.

2. Verfahren nach Anspruch 1, **dadurch gekennzeichnet, dass** das erste Material verschieden ist vom zweiten Material.

3. Verfahren nach Anspruch 1 oder 2, **dadurch gekennzeichnet, dass** die Zwischenschicht (12) das erste Material umfasst oder aus dem ersten Material besteht.

4. Verfahren nach einem der vorhergehenden Ansprüche, **dadurch gekennzeichnet, dass** zumindest eines von dem ersten und dem zweiten Bauteil (10, 10A, 10B, 11, 11A) eine Nickelbasislegierung umfasst oder daraus besteht.

5. Verfahren nach einem der vorhergehenden Ansprüche, **dadurch gekennzeichnet, dass** das erste Material Inconel-718 ist und das zweite Material CMSX-4 ist.

6. Verfahren nach einem der vorhergehenden Ansprüche, **dadurch gekennzeichnet, dass** die Zwischenschicht (12) nach dem Verbinden zwischen dem ersten Bauteil (10, 10A, 10B) und dem zweiten Bauteil (11, 11A) angeordnet ist.

7. Verfahren nach einem der vorhergehenden Ansprüche, **dadurch gekennzeichnet, dass** die generative Fertigung Laserauftragsschweißen ist.

8. Verfahren nach einem der vorhergehenden Ansprüche, **dadurch gekennzeichnet, dass** mehrere zweite Bauteile (11A) bereitgestellt werden, wobei auf jedes zweite Bauteil (11A) durch Auftragsschweißen eine Zwischenschicht (12) aufgebracht wird und die Zwischenschicht (12) jedes zweiten Bauteils (11A) mit dem ersten Bauteil (10, 10A, 10B) mittels Reibschweißen verbunden wird.

9. Verfahren nach einem der vorhergehenden Ansprüche, **gekennzeichnet durch** den nachfolgenden Schritt (S104) einer Schweißnachbehandlung, insbesondere umfassend eine Wärmebehandlung.

10. Verfahren nach einem der vorhergehenden Ansprüche, **dadurch gekennzeichnet, dass** das Bereitstellen des ersten Bauteils das Schmieden des ersten Bauteils umfasst.

11. Verfahren nach einem der vorhergehenden Ansprüche, **dadurch gekennzeichnet, dass** das erste Bauteil (10A, 10B) ein Schaufelträger oder ein Teil eines Schaufelträgers für eine Strömungsmaschine (2) ist.

12. Verfahren nach einem der vorhergehenden Ansprüche, **dadurch gekennzeichnet, dass** das zweite Bauteil (11A) ein Schaufelblatt für eine Strömungsmaschine (2) ist.

13. Verfahren nach einem der vorhergehenden Ansprüche zur Herstellung eines Schaufelkranzes (1A, 1B) für eine Strömungsmaschine (2), **dadurch gekennzeichnet, dass** das erste Bauteil (10A, 10B) in Form eines Rings oder einer Scheibe für eine Strömungsmaschine (2) bereitgestellt wird und das zumindest eine zweite Bauteil (11A) in Form eines Schaufelblatts, nämlich einer Verdichterschaufel oder einer Turbinenschaufel, bereitgestellt wird.

14. Vorrichtung (1, 1A, 1B), insbesondere hergestellt durch das Verfahren nach einem der vorhergehenden Ansprüche, mit
- einem ersten Bauteil (10, 10A, 10B), umfassend oder bestehend aus einem ersten Material;
- zumindest einem zweiten Bauteil (11, 11B), umfassend oder bestehend aus einem zweiten Material;
- einer auf das zweite Bauteil (11, 11A) mittels generativer Fertigung, insbesondere durch Auftragsschweißen, aufgebrachten Zwischenschicht (12); und
- einer Schweißverbindung, insbesondere in Form einer Reibschweißnaht (14), die die Zwischenschicht (12) am zweiten Bauteil (11, 11A) mit dem ersten Bauteil (10, 10A, 10B) stoffschlüssig verbindet.

15. Vorrichtung (1, 1A, 1B), insbesondere nach Anspruch 14, mit
- einem ersten Bauteil (10, 10A, 10B), umfassend oder bestehend aus einem ersten Material;
- zumindest einem zweiten Bauteil (11, 11B), umfassend oder bestehend aus einem zweiten Material;
wobei das erste Material des ersten Bauteils (10, 10A, 10B) mit dem zweiten Material des zweiten Bauteils (11, 11B) über eine Zwischenschicht (12) und eine weitere Schicht, insbesondere eine Reibschweißnaht (14), stoffschlüssig verbunden ist, wobei die Zwischenschicht (12) benachbart zum zweiten Bauteil (11, 11B) angeordnet ist und eine erste Korngröße aufweist, und die weitere Schicht zwischen der Zwischenschicht (12) und dem ersten Bauteil (10, 10A, 10B) angeordnet ist und eine zweite Korngröße aufweist, die kleiner ist als die erste Korngröße, und wobei das erste Material eine dritte Korngröße aufweist, die kleiner ist als die erste Korngröße und größer als die zweite Korngröße.

16. Vorrichtung (1A, 1B) nach Anspruch 14 oder Anspruch 15, **dadurch gekennzeichnet, dass** die Vorrichtung (1A, 1B) als Schaufelkranz für eine Strömungsmaschine (2) ausgebildet ist und mehrere zweite Bauteile (11A) in Form jeweils eines Schaufelblatts umfasst.
